# EUROPEAN PATENT APPLICATION

(11) **EP 4 534 708 A1**
(43) Date of publication of application: **09.04.2025**
(21) Application number: 23809965.9
(22) Date of filing: 23.03.2023
(51) Int. Cl.: C22B 26/12, C22B 1/00, C22B 7/00, H01M 10/54

(54) **LITHIUM-CONTAINING SLAG, AND METHOD FOR PRODUCING VALUABLE METAL**

(30) Priority: 26.05.2022 JP 2022086162
(71) Applicant: SUMITOMO METAL MINING CO., LTD., Tokyo 105-8716 (JP)
(72) Inventor: YAMASHITA, Yu, Niihama-shi, Ehime 792-0002 (JP); NAGAKURA, Toshihiko, Niihama-shi, Ehime 792-0002 (JP)
(74) Representative: Jones, Nicholas Andrew
(86) International application number: PCT/JP2023/011422
(87) International publication number: WO 2023/228537

(57) **Abstract**

To provide a slag that allows the slag melting point to be effectively controlled to a predetermined temperature or below while keeping down the amount of flux added and that effectively concentrates Li by keeping down the amount of slag in Li-containing slag obtained by melting a raw material such as discarded lithium ion batteries that contains Li and Al. The present invention is an Li-containing slag obtained by melting a raw material containing discarded lithium ion batteries that contain lithium (Li) and aluminum (Al), characterized by having relationships of Al/Li < 5 and silicon (Si)/Li < 0.7 by mass ratio and by containing Al in a proportion of 20 mass% or less, Li in a proportion of 3-20 mass%, and Si in a proportion of 0-7 mass%.

## Description

### TECHNICAL FIELD

The present invention relates to a lithium-containing slag and a method for producing a valuable metal.

### BACKGROUND ART

In recent years, lithium ion batteries have become popular for their lightweight and high power. A well-known lithium ion battery has a structure including an outer case and negative and positive electrode materials, a separator, and an electrolytic solution, sealed in the outer case.

For example, in a lithium ion battery, the outer can is constituted by a metal such as iron (Fe) or aluminum (Al). The negative electrode material is constituted by a negative electrode active material (e.g., graphite) fixed to a negative electrode current collector (e.g., copper foil). The positive electrode material is constituted by a positive electrode active material (lithium nickelate, lithium cobaltate, etc.) fixed to a positive electrode current collector (aluminum foil, etc.). The separator is constituted by a porous resin film of polypropylene or the like. The electrolytic solution includes an electrolyte such as lithium hexafluorophosphate (LiPF₆).

One of the main applications of lithium ion batteries is hybrid vehicles and electric vehicles. According to the life cycle of such vehicles, therefore, a huge number of lithium ion batteries, which are now installed in them, are expected to be discarded in the future. Further, some lithium ion batteries are discarded as defective products during manufacture. There is a need to reuse such used batteries or defective batteries (hereinafter referred to as "discarded lithium ion batteries") occurring during the manufacturing process as a resource.

As a recycling method, a pyrometallurgical smelting process has been proposed, in which discarded lithium ion batteries are entirely melted in a high temperature furnace. Such a pyrometallurgical smelting process includes melting crushed discarded lithium ion batteries; separating valuable metals, such as cobalt (Co), nickel (Ni), and copper (Cu), which are to be recovered, and less valuable metals, such as iron (Fe) and aluminum (Al), based on the difference in oxygen affinity between the valuable and less valuable metals; and recovering the valuable metals. This technique includes oxidizing metals with a low-added value as much as possible so as to form a slag, and suppressing oxidation of valuable metals as much as possible to recover them as alloys.

For example, Patent Document 1 discloses a technique for a Li₂O-supported metallurgical slag, characterized by including Al₂O₃, SiO₂, CaO, and MnO and satisfying the following weight composition: 3% < Li₂O < 20%, 1% < MnO < 7%, 38% < Al₂O₃ < 65%, CaO < 55%, and SiO₂ < 45%. However, the Li₂O-supported metallurgical slag disclosed in Patent Document 1 contains Al₂O₃ in a content of more than 38%, which not only increases a slag melting point but also increases an amount of slag. Therefore, in a process of manufacturing a valuable metal from a raw material of discarded lithium ion batteries or the like, if such a Li₂O-supported metallurgical slag is formed, it is necessary to increase an amount of flux added in order to lower the melting point of the slag. In addition, since an amount of slag formed (slag amount) increases due to an increase in the amount of flux added, a content of Li in the slag decreases, and a slag in which Li is sufficiently concentrated cannot be obtained.

### Citation List

### Patent Document

Patent Document 1: Japanese Unexamined Patent Application (Translation of PCT Application), Publication No. 2019-502826

### DISCLOSURE OF THE INVENTION

### Problems to be Solved by the Invention

The present invention has been proposed in view of such circumstances, and can control the slag melting point to a predetermined temperature or lower, while suppressing the amount of flux added, in a Li-containing slag obtained by melting discarded lithium ion batteries, etc. containing Li and Al, as a raw material, and an object of the present invention is to provide a slag in which Li is effectively concentrated by suppressing the slag amount; and a method for producing a valuable metal, the method including producing the slag.

### Means for Solving the Problems

In order to solve the above-described problems, the present inventors provide the following.
(1) A first aspect of the present invention is a Li-containing slag obtained by melting a raw material containing a discarded lithium ion battery containing lithium (Li) and aluminum (Al). The Li-containing slag has relationships of Al/Li < 5 and silicon (Si)/Li < 0.7 in mass ratio, and contains Al in a proportion of 20% by mass or less, Li in a proportion of 3% by mass or more and 20% by mass or less, and Si in a proportion of 0% by mass or more and 7% by mass or less.
(2) A second aspect of the present invention is the Li-containing slag as described in the first aspect, having a relationship of Si/Li < 0.35 in mass ratio.
(3) A third aspect of the present invention is a method for producing a valuable metal from a raw material containing a discarded lithium ion battery containing lithium (Li) and aluminum (Al), the method including: a pretreatment step of removing an outer can constituted by Al from the raw material; and a melting step of melting a raw material obtained through the pretreatment step to obtain a Li-containing slag and a metal containing the valuable metal. The Li-containing slag obtained in the melting step has relationships of Al/Li < 5 and silicon (Si)/Li < 0.7 in mass ratio, and contains Al in a proportion of 20% by mass or less, Li in a proportion of 3% by mass or more and 20% by mass or less, and Si in a proportion of 0% by mass or more and 7% by mass or less.

### Effects of the Invention

According to the present invention, it is possible to effectively control a slag melting point to a predetermined temperature or lower, while suppressing an amount of flux added and also to provide a slag in which Li is effectively concentrated by suppressing the slag amount; and a method for producing a valuable metal including producing the slag.

### PREFERRED MODE FOR CARRYING OUT THE INVENTION

Hereinafter, specific embodiments of the present invention (hereinafter, referred to as "the present embodiments") will be described. The present invention is not limited to the following embodiments, and various modifications can be made without departing from the gist of the present invention.

### <<1. Lithium-Containing Slag>>

The lithium (Li)-containing slag (hereinafter simply referred to as "slag") according to the present embodiment is the one obtained by melting a raw material containing discarded lithium ion batteries containing Li and aluminum (Al). Note that the raw material including discarded lithium ion batteries is a concept including not only used lithium ion batteries (waste batteries) but also components of the waste batteries.

The Li-containing slag is used as a raw material for separating and extracting Li to recover it. Therefore, in the Li-containing slag, Li is preferably effectively concentrated and has a large content thereof.

Specifically, the Li-containing slag according to the present embodiment is characterized by having a composition satisfying relationships of Al/Li < 5 and silicon (Si)/Li < 0.7 in mass ratio, and containing Al in a proportion of 20% by mass or less, Li in a proportion of 3% by mass or more and 20% by mass or less, and Si in a proportion of 0% by mass or more and 7% by mass or less.

The Li-containing slag includes Al. Al contained in the Li-containing slag is derived from outer cans, which constitute the discarded lithium ion batteries as the raw material and/or current collectors holding a positive electrode active material, or the like. In the Li-containing slag, an Al content thereof is 20% by mass or less. The Al content is preferably 19% by mass or less, and more preferably 18% by mass or less.

As described above, if the Al content is 20% by mass or less, slag melting point can be suppressed, and the amount of flux added at a predetermined proportion with respect to Al in the melting treatment can be suppressed. By suppressing the amount of flux added, the slag amount (amount of slag formed) can be suppressed, resulting in an increase in the concentration of Li contained in the slag. That is, Li can be effectively concentrated in the slag.

In the Li-containing slag, a content of Li is 3% by mass or more. The content of Li is preferably 4% by mass or more, and more preferably 6% by mass or more. In a slag having the Li content of 3% by mass or more, Li is effectively concentrated, the melting point of the slag can be lowered, and cost of recovering Li from the slag can be reduced. Note that the upper limit of the content of Li is not particularly limited, but when it is 20% by mass or less, damage to a furnace wall refractory material of a furnace used in the melting treatment can be prevented.

In the Li-containing slag, a value of Al/Li, which is mass ratio of Al and Li, is less than 5 (Al/Li < 5). Further, Al/Li < 4 is preferable, and Al/Li < 3 is more preferable. As described above, by satisfying the relationship of Al/Li < 5, an amount of Al₂O₃ formed in the slag can be reduced, and in addition, an amount of flux added in the melting treatment can be suppressed, and as a result, the Li concentration in the slag can be effectively increased.

The Li-containing slag contains Si in a proportion of 0% by mass or more and 7% by mass or less. A Si content is preferably 5% by mass or less, and more preferably 3% by mass or less. When the Si content is 7% by mass or less, the Li content in the slag can be increased.

In the Li-containing slag, a value of Si/Li, i.e., mass ratio of Si and Li, is less than 0.7 (Si/Li < 0.7). As described above, by performing the melting treatment so as to obtain the slag satisfying the relationship of Si/Li < 0.7, the Li content in the slag can be effectively increased. That is, in the melting treatment, for example, an increase in the slag melting point due to Al₂O₃ formed in the slag is suppressed by adding flux, and by avoiding use of silicon dioxide (SiO₂) having a relatively low effect on lowering the slag melting point or avoiding Si from mixing in as much as possible, the Li content in the slag can be efficiently increased.

As the flux, it is preferable to use calcium oxide (CaO), etc. having a large effect on lowering the slag melting point, as will be described later.

Further, in the Li-containing slag, Si/Li < 0.35 in mass ratio is more preferable. By satisfying the relationship of Si/Li < 0.35, the Li extraction ratio (leaching ratio) at the time of separating and extracting Li from the slag can be improved. For example, when Li contained in a Li-containing slag is extracted (leached) into a liquid using a mineral acid, etc., if SiO is present around Li, the Li extraction rate rapidly decreases. Therefore, in the Li-containing slag, when Si/Li is preferably less than 0.35, Li can be effectively and efficiently separated and extracted.

### <<2. Method for Producing Valuable Metal>>

The method for producing a valuable metal according to the present embodiment is a method for separating and recovering a valuable metal (for example, Cu, Ni, Co) from a raw material including discarded lithium ion batteries containing lithium (Li) and aluminum (Al). Therefore, this method can be reworded to a method for recovering a valuable metal. The method according to the present embodiment is mainly on the basis of a method using a pyrometallurgical smelting process, but may include a pyrometallurgical smelting process and a hydrometallurgical smelting process.

Specifically, the method according to the present embodiment includes a pretreatment step including a step of removing outer cans made of Al from a raw material including discarded lithium ion batteries, and a melting step of melting the raw material obtained through the pretreatment step to obtain a Li-containing slag and a metal including a valuable metal.

This method is characterized in that the Li-containing slag obtained in the melting step satisfies relationships of Al/Li < 5 and silicon (Si)/Li < 0.7 in mass ratio, and contains Al in a proportion of 20% by mass or less, Li in a proportion of 3% by mass or more and 20% by mass or less, and Si in a proportion of 0% by mass or more and 7% by mass or less.

As described above, the raw material includes discarded lithium ion batteries. The discarded lithium ion battery is a concept including not only a used waste battery itself but also components of the waste battery. The valuable metal contained in the raw material is not particularly limited and is, for example, at least one metal or an alloy selected from the group consisting of copper (Cu), nickel (Ni), cobalt (Co), and combinations thereof.

### [Waste Battery Pretreatment Step]

A waste battery pretreatment step S1 is a step of preparing an object to be melted (raw material to be melted, matter to be charged into furnace), which is subjected to a melting treatment, when subjecting a raw material containing discarded lithium ion batteries to a melting treatment to obtain a reduced product made of a Li-containing slag and a metal composed of a valuable metal. In particular, the waste battery pretreatment step S1 includes a treatment of removing outer cans made of Al.

A discarded lithium ion battery is generally constituted by containing an electrolytic solution and active materials of positive electrode/negative electrode inside an outer can made of Al, and is a sealed system. Therefore, if the treatment is carried out as it is, there is a risk that an explosion may occur due to, for example, an electrolytic solution inside the outer can. Further, as described above, since the outer can is mainly made of Al, if the melting treatment is performed in the state as it is, Al is distributed in the slag and the Al content will increase.

Therefore, in the waste battery pretreatment step S1, at least a treatment of removing the outer can made of Al is performed. By performing the treatment of removing the outer can, the electrolytic solution inside the outer can also can be removed, and thus, a treatment with enhanced safety can be performed, which can enhance recovery productivity of valuable metals such as Cu, Ni, Co, etc. In addition, since it is possible to avoid Al derived from the outer can from mixing in, the Al content in the slag can be reduced. In other words, the treatment of removing the outer can in the waste battery pretreatment step S1 enables the Al content in the slag (Li-containing slag) obtained by the melting treatment to be controlled.

As described above, by separating Al contained in the outer can, a proportion of Al to be charged in a melting step S3 can be significantly reduced. Thereby, since Al is contained, it is possible to significantly suppress the amount of flux to be added in proportion to the content of Al. As a result, the amount of slag obtained through the melting step S3 can be significantly reduced, whereby the concentration of Li contained in the slag can be increased.

A specific method of removing outer cans is not particularly limited. After the discarded lithium ion batteries including outer cans are discharged, the electrolytic solution is removed by roasting at a temperature of 200°C to 300°C to obtain a battery content (roasted product). Then, the obtained battery content is subjected to a pulverization treatment and sieved to thereby separate the battery content into an oversize matter containing Al and matter to be charged into a furnace, which is a subject of furnace melting. Al can be easily pulverized and efficiently separated even in the case of mild pulverization.

The pulverization treatment is also aimed at enhancing the reaction efficiency in the subsequent pyrometallurgical smelting process as one of the purposes thereof, and is capable of improving the recovery ratio of valuable metals such as Cu, Ni, and Co by enhancing the reaction efficiency. The pulverization method is not particularly limited, and contents (roasted product) of batteries can be pulverized using a conventionally known pulverizer such as a cutter mixer.

### [Preheating Step]

The pulverized product of the discarded lithium ion batteries subjected to the waste battery pretreatment step S1 may be subjected to an oxidative roasting treatment to heat it to a predetermined temperature by providing a preheating step S2 as necessary. As described above, by performing the oxidative roasting treatment in the preheating step S2, impurities contained in the battery content can be volatilized or thermally decomposed and removed.

In the preheating step S2, it is preferable to perform oxidative roasting by heating at a temperature of, for example, 700°C or higher (preheating temperature). When the preheating temperature is 700°C or higher, removal efficiency of impurities contained in the batteries can be increased. On the other hand, the upper limit of the preheating temperature is preferably 900°C or less, whereby a thermal energy cost can be suppressed, resulting in treatment efficiency increased.

The oxidative roasting treatment is preferably carried out in the presence of an oxidizing agent. This makes it possible to efficiently oxidize and remove carbon (C) among impurities contained in the battery content. In addition, Al can be oxidized. In particular, by oxidizing and removing C, molten fine particles of a valuable metal locally generated in the subsequent melting step S3 can aggregate without physical hindrance due to C, and an alloy obtained as a molten material can be easily integrated and recovered. In general, main elements constituting discarded lithium ion batteries are easily oxidized in the order of Al > Li > C > Mn (manganese) > P (phosphorus) > Fe (iron) > Co > Ni > Cu due to the difference in affinity toward oxygen.

The oxidizing agent is not particularly limited, but a gas containing oxygen such as air, pure oxygen, or an oxygen-enriched gas is preferably used from the viewpoint of easy handling. An amount of the oxidizing agent introduced can be about 1.2 times the chemical equivalent required for oxidation of each substance to be oxidized.

### [Melting Step]

In the melting step (reductive melting step) S3, the pulverized product (object to be melted, matter to be charged into furnace) of discarded lithium ion batteries is melted (reductive melting) together with flux to obtain a reduced product composed of a molten metal containing a valuable metal and a slag containing Li (Li-containing slag). As a result, impurity elements such as Al are contained in the slag as oxides, and P is also incorporated into the flux and contained in the slag. On the other hand, a valuable metal such as Cu, which does not easily form an oxide, is melted and can be recovered as an integrated alloy from a melt.

Here, the method according to the present embodiment is characterized in that the Li-containing slag obtained by the treatment in the melting step S3 has the following composition. That is, the Li-containing slag satisfies relationships of Al/Li < 5 and silicon (Si)/Li < 0.7 in mass ratio, and contains Al in a proportion of 20% by mass or less, Li in a proportion of 3% by mass or more and 20% by mass or less, and Si of 0% by mass or more and 7% by mass or less.

In the melting treatment for obtaining such a Li-containing slag, the slag melting point can be appropriately controlled to be equal to or lower than a predetermined temperature while suppressing an amount of flux added. In addition, since the amount of flux added can be suppressed, the amount of slag formed can be suppressed, whereby a slag in which Li is effectively concentrated can be obtained.

The Li-containing slag obtained by the melting treatment can be used as a raw material for separating and extracting Li. Therefore, it is preferable that the slag amount formed through the melting treatment is small, whereby the Li content is increased, that is, Li-enriched slag is obtained.

Since the Li-containing slag having the composition described above is as described above, a detailed description thereof will be omitted here.

The flux added in the melting treatment preferably contains an element that incorporates an impurity element and forms a basic oxide having a low melting point. Among them, it is more preferable to contain a calcium compound from the viewpoint of being inexpensive and stable at room temperature. Specifically, as the calcium compound, for example, calcium oxide or calcium carbonate can be used.

The melting treatment may be performed in the presence of an oxidizing agent or a reducing agent in order to appropriately adjust the oxidation-reduction degree at the time of melting the raw material containing discarded lithium ion batteries. As the oxidizing agent, a known oxidizing agent can be used, and a solid oxidizing agent may be added or a gaseous oxidizing agent may be introduced into the furnace. As the reducing agent, a known reducing agent can be used, but a reducing agent containing a carbon atom is preferable. By adding the reducing agent containing a carbon atom, it is possible to easily reduce oxides of Cu, Ni, Co, or the like, which are valuable metals to be recovered, contained in discarded lithium ion batteries.

The heating temperature (melting temperature) in the melting treatment is not particularly limited, but is preferably 1300°C or higher, and more preferably 1350°C or higher. By performing the melting treatment at a temperature of 1300°C or higher, valuable metals such as Cu, Ni, and Co are efficiently melted, and alloys are formed with their fluidity sufficiently enhanced. Therefore, it is possible to improve separation efficiency between the valuable metal and the impurity component in a slag separation step S4 described later. If the heating temperature is lower than 1300°C, the separation efficiency between the valuable metal and the impurity may be insufficient. The upper limit of the heating temperature in the melting treatment is preferably 1600°C or less. When the heating temperature exceeds 1,600°C, thermal energy is wastefully consumed, and refractory materials such as crucibles or furnace walls are rapidly consumed, resulting in a decrease in productivity.

In addition, at the time of heating in the melting treatment, since the fluidity of the melt is low at the stage where the heating temperature reaches the heating temperature and the reduced product remains unmolten, it is necessary to maintain the heating temperature for 30 minutes or more, for example. Finally, it is preferable to observe the inside of the crucible and confirm whether the slag has completely turned molten or not, with an iron scale bar. After melting, the metal and the slag having high fluidity are separated from each other in the crucible according to their specific gravities such that the metal is in a lower layer and the slag is in an upper layer. Thereafter, cooling and pulverization are performed.

In the melting treatment, dust, an exhaust gas, and the like may be generated, but they can be detoxified by performing a conventionally known exhaust gas treatment.

### [Slag Separation Step]

In the slag separation step S4, the slag is separated from the reduced product obtained in the melting step S3, and a metal containing a valuable metal is recovered. Thus, the metal to be manufactured can be obtained. Since the reduced metal and the slag are separated from each other due to the difference in the specific gravities in the crucible as described above, the molten metal can be efficiently recovered by separating the slag.

In addition, as described above, the slag separated from the reduced product is a Li-containing slag in which Li is effectively concentrated, and can be used as a raw material for separating and extracting Li, by separating and recovering Li from the reduced product.

### EXAMPLES

Hereinafter, Examples of the present invention will be described in more detail, but the present invention is not limited to the following Examples.

### (1) Recovery of Valuable Metals

### [Examples 1 to 4]

Valuable metals were recovered, using discarded lithium ion batteries as a raw material. Recovery was performed according to the following steps.

### <Waste Battery Pretreatment Step (Preparation Step)>

As discarded lithium ion batteries, 18650 cylindrical batteries, used square batteries for vehicle applications, and defective products collected in the battery production process were prepared. These waste batteries were immersed in salt water to discharge, and the moisture was then removed, followed by roasting in the air at 260°C to remove the electrolytic solution, thereby obtaining a battery content.

### <Pulverization Step (Preparation Step)>

The obtained battery content was pulverized using a pulverizer (Good Cutter, manufactured by Ujiie Manufacturing Co., Ltd.). Next, after sorting the pulverized product obtained with an aluminum sorting machine using eddy current, the pulverized product was sieved using a sieve shaker. Aluminum was separated as matter on the sieve, and matter under the sieve was used as a matter to be charged.

### <Oxidative Roasting Step>

The obtained pulverized product (matter to be charged) was oxidatively roasted to obtain an oxidatively roasted product. The oxidative roasting was carried out using a rotary kiln at 900°C for 180 minutes in the air.

### <Reductive Melting Step>

To the resulting oxidatively roasted product, graphite was added as a reducing agent in an amount of 0.6 times a total number of moles of valuable metals (Cu, Ni, Co), i.e., 1.2 times the number of moles necessary for reducing the valuable metals, so as to obtain slag compositions described in Table 1 below. Further, calcium oxide (CaO) was added as a flux so that an Al/Ca ratio of the slag was 2.28 to 2.67 and mixed, and the mixture obtained was charged into a crucible made of alumina (Al₂O₃).

Thereafter, the mixture charged into the crucible was heated and subjected to a reductive melting treatment to alloy the valuable metals, thereby obtaining a reduced product containing alloys and a slag (Li-containing slag). The reductive melting treatment was performed under the condition of resistance heating at a temperature of 1450°C for 60 minutes. In the reductive melting treatment, a partial pressure of oxygen in the melt was measured using an oxygen analyzer equipped with an oxygen probe (OXT-O, manufactured by Kawaso Electric Industrial) at the tip. The oxygen partial pressure was adjusted by adding graphite or blowing air using a lance.

### <Slag Separation Step>

A slag (Li-containing slag) was separated from the obtained reduced product to recover an alloy, which was defined as a recovered alloy.

### [Comparative Example 1]

The same treatment as in the Examples were carried out, except that separation of Al was not carried out in the pulverization step. In the Examples, Al grade in the raw material was 9% by mass to 11% by mass, whereas in Comparative Example 1, Al grade in the raw material was 20% by mass.

### (2) Evaluation

### <Component Analysis of Slag>

Component analysis of the Li-containing slag separated from the reduced product was performed as follows. That is, the obtained slag was pulverized after cooling and subjected to chemical analysis.

### (3) Results

Compositions of the Li-containing slags obtained by the respective treatments of Examples 1 to 4 and Comparative Example 1 are shown in Tables 1 and 2 below. Table 3 below shows treatment conditions such as an amount of flux added and an amount of slag formed.

**[Table 1]**

| | Slag composition | | | | | | | | | |
|---|---|---|---|---|---|---|---|---|---|---|
| | Al₂O₃ | Al | Si₂O | Si | CaO | Li₂O | Li | MnO | Li₂O/ (Li₂O+Al₂O₃ | CaO/ (CaO+Al₂O₃) |
| Example 1 | 37.8 | 20.0 | 4.3 | 2.0 | 18.2 | 13.8 | 6.4 | 11.6 | 0.267 | 0.325 |
| Example 2 | 35.9 | 19.0 | 3.8 | 1.8 | 15.4 | 13.6 | 6.3 | 11.8 | 0.274 | 0.300 |
| Example 3 | 34.0 | 18.0 | 3.2 | 1.5 | 14.0 | 14.4 | 6.7 | 18.1 | 0.298 | 0.292 |
| Example 4 | 37.8 | 20.0 | 4.1 | 1.9 | 18.2 | 9.5 | 4.4 | 14.2 | 0.200 | 0.325 |
| Comparative Example 1 | 39.7 | 21.0 | 14.3 | 6.7 | 26.6 | 5.8 | 2.7 | 3.5 | 0.128 | 0.401 |

**[Table 2]**

| | Slag composition in mass ratio | | | Slag composition in molar ratio | | |
|---|---|---|---|---|---|---|
| | Al/Li | Si/Li | Al/Ca | Al/Li | Si/Li | Al/Ca |
| Example 1 | 3.13 | 0.31 | 1.54 | 0.80 | 0.08 | 2.28 |
| Example 2 | 3.02 | 0.29 | 1.73 | 0.78 | 0.07 | 2.57 |
| Example 3 | 2.69 | 0.22 | 1.80 | 0.69 | 0.06 | 2.67 |
| Example 4 | 4.55 | 0.43 | 1.54 | 1.17 | 0.11 | 2.28 |
| Comparative Example 1 | 7.78 | 2.48 | 1.11 | 2.00 | 0.61 | 1.64 |

**[Table 3]**

| | Raw material (g) | Amount of flux added (g) | Amount of slag formed(g) | Flux/raw material | Slag/raw material |
|---|---|---|---|---|---|
| Example 1 | 994 | 77 | 453 | 0.08 | 0.46 |
| Example 2 | 526 | 44 | 267 | 0.08 | 0.51 |
| Example 3 | 418 | 32 | 227 | 0.08 | 0.54 |
| Example 4 | 272 | 25 | 150 | 0.09 | 0.55 |
| Comparative Example 1 | 38 | 15 | 36 | 0.39 | 0.95 |

As shown in the above Tables, in Comparative Example 1, the amount of flux added/the amount of raw material was 0.39, whereas in Examples 1 to 3, the amount of flux added/the amount of raw material was 0.08 and in Example 4, the amount of flux added/the amount of raw material was 0.09. In Comparative Example 1, the amount of slag formed/the amount of raw material was 0.95, whereas in Examples 1 to 3, the amount of slag formed/the amount of raw material was 0.46 to 0.54 and in Example 4, the amount of slag formed/the amount of raw material was 0.55.

That is, it can be seen that the amount of flux added could be suppressed by performing the treatment so that the slags having the compositions in Examples 1 to 4 could be obtained, whereby the amount of slag generated could be effectively suppressed. As a result, Li in the slag was effectively concentrated, and 6% by mass or more of Li could be contained in the slag in Examples 1 to 3, and 4% by mass or more of Li could be contained in the slag in Example 4.

## Claims

1. A Li-containing slag obtained by melting a raw material comprising a discarded lithium ion battery comprising lithium (Li) and aluminum (Al),
the Li-containing slag having relationships of Al/Li < 5 and silicon (Si)/Li < 0.7 in mass ratio, and
comprising:
Al in a proportion of 20% by mass or less,
Li in a proportion of 3% by mass or more and 20% by mass or less, and
Si in a proportion of 0% by mass or more and 7% by mass or less.

2. The Li-containing slag according to claim 1,
having a relationship of Si/Li < 0.35 in mass ratio.

3. A method for producing a valuable metal from a raw material comprising a discarded lithium ion battery comprising lithium (Li) and aluminum (Al), the method comprising:
a pretreatment step of removing an outer can constituted by Al from the raw material; and
a melting step of melting a raw material obtained through the pretreatment step to obtain a Li-containing slag and a metal comprising the valuable metal,
wherein the Li-containing slag obtained in the melting step has
relationships of Al/Li < 5 and silicon (Si)/Li < 0.7 in mass ratio,
and comprises:
Al in a proportion of 20% by mass or less,
Li in a proportion of 3% by mass or more and 20% by mass or less, and
Si in a proportion of 0% by mass or more and 7% by mass or less.
